(19) Europäisches Patentamt / European Patent Office / Office européen des brevets

(11) **EP 1 920 259 B1**

(12) **EUROPÄISCHE PATENTSCHRIFT**

(45) Veröffentlichungstag und Bekanntmachung des Hinweises auf die Patenterteilung:
**24.02.2010   Patentblatt 2010/08**

(51) Int Cl.:
*G01P 1/00* (2006.01)    *B60T 8/88* (2006.01)
*G01D 18/00* (2006.01)

(21) Anmeldenummer: **06806747.9**

(22) Anmeldetag: **01.09.2006**

(86) Internationale Anmeldenummer:
**PCT/EP2006/065931**

(87) Internationale Veröffentlichungsnummer:
**WO 2007/026022 (08.03.2007 Gazette 2007/10)**

(54) **VERFAHREN ZUR KALIBRIERUNG EINES SENSORS, INSBESONDERE EINES GIERRATENSENSORS**

METHOD FOR CALIBRATING A SENSOR, ESPECIALLY A YAW RATE SENSOR

PROCEDE D'ETALONNAGE D'UN DETECTEUR, NOTAMMENT D'UN DETECTEUR DE VITESSE DE LACET

(84) Benannte Vertragsstaaten:
**DE FR**

(30) Priorität: **02.09.2005   DE 102005042059**
**01.09.2006   DE 102006041289**

(43) Veröffentlichungstag der Anmeldung:
**14.05.2008   Patentblatt 2008/20**

(73) Patentinhaber: **Continental Teves AG & Co. oHG**
**60488 Frankfurt (DE)**

(72) Erfinder:
• **FENNEL, Helmut**
  **65812 Bad Soden (DE)**
• **HERBST, Ralf**
  **56355 Nastätten (DE)**
• **KITZ, Rainer**
  **61130 Nidderau (DE)**

(74) Vertreter: **Graf, Ulrich**
**Continental Teves AG & Co.oHG**
**Guerickestrasse 7**
**60488 Frankfurt am Main (DE)**

(56) Entgegenhaltungen:
**EP-A- 1 059 509    EP-A2- 1 221 586**
**GB-A- 2 144 225    US-A- 4 675 820**
**US-A- 5 527 003**

## Beschreibung

Die Erfindung betrifft ein Verfahren zur Kalibrierung eines Sensors, insbesondere eines Gierratensensors, bei dem Sensorwerte und zugehörige Temperaturwerte (T) in Form von Stützstellen in einem nichtflüchtigen Speicher des Sensors abgelegt werden, wobei die Werte während eines Kalibriermodus ermittelt werden, bei dem der Sensor einem vorgegebenen Temperaturprofil ausgesetzt wird und einen Sensor.

In Kraftfahrzeugen mit ESP-Funktionalität werden vielfach sogenannte Sensor Cluster eingesetzt, welche Gierratensensoren enthalten, die über einen Datenbus mit einem gesonderten elektronischen Bremsensteuergerät (EBS) verbunden sind. Ein Sensor Cluster besteht aus einem geschirmten Gehäuse, Gierratensensorelementen, einer Verarbeitungselektronik (z.B. Mikrocontroller) und einem Datenbus, wie zum Beispiel ein CAN-Bus (WO 00/32022).

Im Sensor Cluster wird mindestens ein Gierratensensor eingesetzt, dessen Nullpunktfehler von Fertigungstoleranzen, Temperatur und Alterung abhängig ist. Im Betrieb des Sensors ist dieser Nullpunkt für mögliche Ungenauigkeiten des Gierratensensors in Abhängigkeit der Temperatur verantwortlich.

Dieser Gierratensensor wird während seiner Fertigung und im Betrieb im Hinblick auf seinen Nullpunktfehler in Grenzen kalibriert.

Fig.1 zeigt die Signalverarbeitung innerhalb des Sensor Clusters, die in der WO 01/50090 A1 beschrieben ist.

In der Fertigung wird das Sensor Cluster in einen speziellen Kalibriermodus geschaltet. Daraufhin durchfährt das Sensor Cluster in einem Temperaturofen einen festgelegten Temperaturbereich. Hierbei wird von der Software im Sensor Cluster die Temperatur und der Nullpunkt des Gierratensensors erfasst.

Aus den eingelesenen Daten werden die Stützstellen $[T, Y_{Offset}]$ bestimmt und in dem nicht-flüchtigen Speicher abgelegt. Daraufhin wird der Kalibriermodus verlassen.

Zur Nullpunktkorrektur des Gierratensensors stehen damit n-Korrekturstellen $[T_n, Y_{Offset}(n)]$ zur Verfügung.

Im Betrieb des Fahrzeugs wird die Temperatur des Sensormoduls ständig gemessen und mit diesem Wert der Nullpunktfehler des Gierratensensors mit Hilfe der abgelegten Stützstellen über lineare Interpolation berechnet.

Das über den CAN-Bus ausgesendete Gierratensignal berechnet sich aus dem gemessenen Sensorsignal und dem berechneten Nullpunkt des Gierratensensors nach der folgenden Beziehung:

$$Y_{Cluster} = Y_{Sensor} - Y_{Offset}$$

Bei erkanntem Fahrzeugstillstand wird die Temperatur des Sensormoduls und die Gierrate gemessen. Diese Werte werden einer der in einem nicht-flüchtigen Speicher abgelegten Temperaturklassen zugeordnet. Durch ein geeignetes Verfahren wird der Mittelwert des bereits abgespeicherten Nullpunkts des Gierratensensors und des neu gemessenen Werts ermittelt. Das Ergebnis wird anstelle des alten Werts im nichtflüchtigen Speicher abgelegt.

Eine Kalibrierung eines Sensors gemäß dem Oberbegriff des unabhängigen Anspruchs 1 ist aus dem Dokument EP1059509 bekannt.

Diese Kalibrierung ist für manche spezielle Anforderungsfälle noch nicht genau genug, daher besteht der Bedarf, diesen Nullpunktfehler noch weiter zu verbessern.

Es ist daher Aufgabe der Erfindung, die Genauigkeit der Kalibrierung des Sensorfehlers noch weiter zu verbessern.

Erfindungsgemäß wird diese Aufgabe dadurch gelöst, dass ein gattungsgemäßes Verfahren zur Kalibrierung eines Sensors, insbesondere eines Gierratensensors, bei dem Sensorwerte und zugehörige Temperaturwerte in Form von Stützstellen in einem nichtflüchtigen Speicher des Sensors abgelegt werden, wobei die Werte während eines Kalibriermodus ermittelt werden, bei dem der Sensor einem vorgegebenen Temperaturprofil ausgesetzt wird, so durchgeführt wird, dass mittels den in dem Kalibriermodus ermittelten Werten Koeffizienten eines Polynoms n-.ter Ordnung bestimmt werden, wobei diese Koeffizienten gespeichert werden, wobei während des Betriebs des Sensors im Kraftfahrzeug mit Hilfe der ermittelten und gespeicherten Koeffizienten $(C_0, ..., C_{n-1}, C_n)$ ein Kompensationswert $Y_{offset}$ mittels eines Polynoms dritter Ordnung berechnet wird.

Polynominterpolationen sind z.B. aus www. mathe-online.at bekannt.

Durch das Verfahren zur Kalibrierung des Nullpunkts eines ungenauen Gierratensensors, das in Abhängigkeit von der Temperatur den noch vorhandenen Nullpunktfehler mittels eines Polynoms n-.ter Ordnung kompensiert und dadurch im Hinblick auf Genauigkeit zu einer Verbesserung führt, kann auch der Anteil des Gierratensensornullpunktfehlers, der auf Alterung zurückzuführen ist, kompensiert werden. Vorteilhaft führt das Verfahren eine Anpassung der ermittelten Koeffizienten über die Betriebsdauer des Sensor Cluster durch, was die Kalibrierung weiterhin verbessert.

Das Verfahren sieht eine Bestimmung von Koeffizienten eines Polynoms n-.ter Ordnung vor, indem das Sensor Cluster während der Fertigung in einem Temperaturofen einen festgelegten Temperaturbereich durchfährt. Hierbei wird von der Sensor Cluster Software die Temperatur und der Nullpunkt des Gierratensensors erfasst. Aus den gemessenen Werten ermittelt das Sensor Cluster die Koeffizienten des Polynoms und legt diese Koeffizienten im nicht-flüchtigen Speicher ab.

Während des Betriebs des Sensor Cluster wird die Temperatur T des Sensormoduls erfasst und der Nullpunkt der Gierrate anhand des Polynoms n-.ter Ordnung und der abgelegten Koeffizienten korrigiert.

Vorteilhaft wird während des Betriebs des Sensors im Kraftfahrzeug, also während bestimmter Betriebszustände des Kraftfahrzeugs, mit Hilfe der ermittelten und gespeicherten Koeffizienten ein Kompensationswert $Y_{Offset}$ mittels eines Polynoms n-.ter Ordnung berechnet.

Vorzugsweise wird während des Betriebs des Sensors im Kraftfahrzeug mit Hilfe des Kompensationswerts $Y_{Offset}$ und des gemessenen Sensorwerts ein fehlerkorrigierter Sensorwert $Y_{Cluster}$ ermittelt.

Dabei werden die ersten Koeffizienten während des Kalibriermodus berechnet und während des Betriebs des Sensors im Kraftfahrzeug die ersten fehlerkorrigierten Sensorwerte ermittelt. Im weitern Verlauf werden vorteilhaft während des Betriebs des Sensors im Kraftfahrzeug dann die berechneten fehlerkorrigierten Sensorwerte $Y_{Cluster}$ und zugehörige Temperaturwerte zur Berechnung der Koeffizienten des Polynoms n-.ter Ordnung bestimmt, wobei diese Koeffizienten gespeichert werden.

Bei einem erfindungsgemäßen Kalibrierverfahren wird während des Betriebs des Sensors im Kraftfahrzeug mit Hilfe der ermittelten und gespeicherten Koeffizienten ein Kompensationswert $Y_{Offset}$ mittels eines Polynoms dritter Ordnung berechnet und dieser Kompensationswert mit dem gemessenen Sensorwert so logisch verknüpft, dass nach der Beziehung $Y_{C-Luster} = Y_{Sensor} - Y_{offset}$ der fehlerkorrigierte Sensorwert erhalten wird, der einem Fahrzeugregler zur Verfügung gestellt werden kann. Bevorzugte Fahrzeugregler sind Fahrstabilitätsregler, wie ESP, ARP, ABS oder Insassenschutzregler.

Bei einem Fahrzeugregler für eine Fahrstabilitätsregelung und/oder einer Insassenschutzregelung läuft ein Verfahren nach einem der Ansprüche 1 bis 4, wenn ein Sensor, insbesondere Gierratensensor vorgesehen ist. Der Sensor ist vorteilhaft mindestens gekennzeichnet durch:

- ein Sensorelement,
- eine Signalverarbeitungseinheit,
- einen Datenbus,
- einen nichtflüchtigen Datenspeicher,
- Mittel zur Modusumschaltung mit mindestens einem Kalibriermodus und einem Betriebsmodus,
- einem Temperatursensor und/oder Mitteln zum Einlesen einer Temperaturinformation, insbesondere über den Datenbus sowie
- geeigneter Algorithmus, welcher aus gespeicherten Sensorwerten und zugehörigen Temperaturwerten die Koeffizienten eines Polynoms n-.ter Ordnung erzeugt.

Das Sensor Cluster besteht bevorzugt aus einem Mikrocontroller (Verarbeitungseinheit) und einem nicht-flüchtigen Speicher, je nach Ausführung aus einer bestimmten Anzahl von Gierratensensoren und Beschleunigungssensoren und einer Signalaufbereitungsstufe.

Nach dem Verfahren bevorzugt werden die Sensordaten durch eine Verarbeitungseinheit eingelesen und dann über eine Bus-Schnittstelle zu den Fahrzeugreglern ausgegeben.

Für die in dieser Erfindung erläuterte Möglichkeit zu Kalibrierung des Nullpunkts kann das Sensor Cluster vorzugsweise um mindestens einen Temperatursensor erweitert werden.

Weitere bevorzugte Ausführungsformen ergeben sich aus den Unteransprüchen und der nachfolgenden Beschreibung eines Ausführungsbeispiels an Hand von folgenden Figuren.

Es zeigen

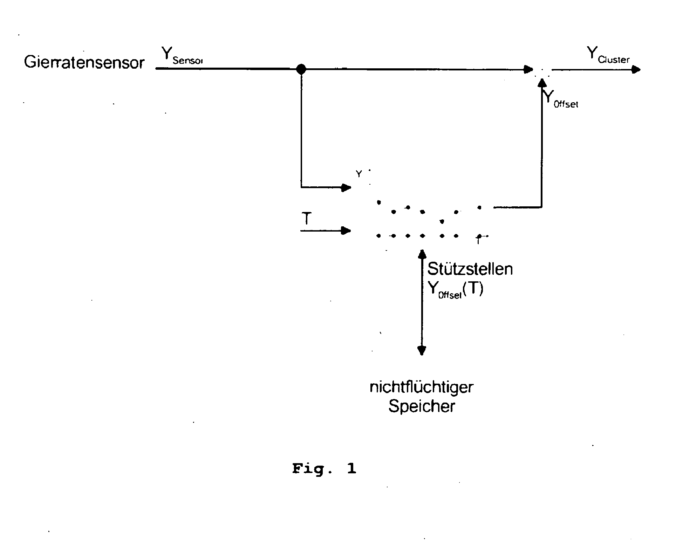

Fig. 1    eine schematische Darstellung der Ermittlung eines Kompensationswertes nach dem Stand der Technik

Fig. 2    eine schematische Darstellung der Ermittlung eines Kompensationswertes nach der Erfindung

Fig. 3    beispielhaft eine Kurve einer Gierrate über die Temperatur

Fig. 4    eine Anzahl von n-Punkten (Stützstellen) [T, $Y_O$], die zur Nullpunkt-Kalibrierung des Gierratensensors herangezogen werden

Fig. 5    eine schematische Darstellung zum Berechnen des neuen Nullpunkts.

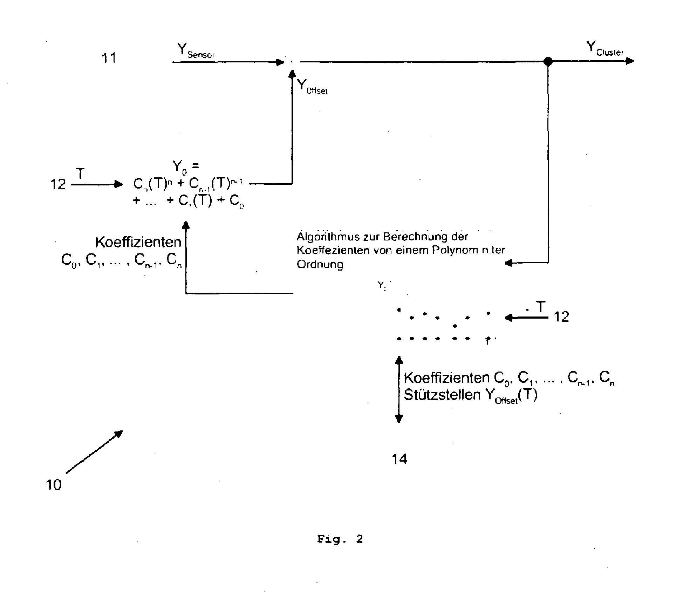

Fig.2 zeigt die Signalverarbeitungseinheit 10 innerhalb des Sensor Clusters. Der Nullpunkt des Gierratensensors 11 ist abhängig von der Temperatur T des Sensormoduls. Zur Messung der Temperatur ist innerhalb des Sensor Clusters ein Temperatursensor 12 wie zum Beispiel in der DE 42 28 893 B4 vorgesehen.

In der Fertigung wird das Sensor Cluster in einen speziellen Kalibriermodus geschaltet. Daraufhin durchfährt das Sensor Cluster in einem Temperaturofen einen festgelegten Temperaturbereich. Hierbei wird von der Sensor Cluster Software die Temperatur und der Nullpunkt des Gierratensensors erfasst. Die eingelesenen Daten werden gruppiert und in dem nicht-flüchtigen Speicher 14 abgelegt. Weiterhin werden aus den erfassten Werten die Koeffizienten $C_0$, ..., $C_{n-1}$, $C_n$ von einem Polynom n-.ter Ordnung mit einem geeigneten Algorithmus bestimmt und ebenfalls im nicht-flüchtigen Speicher 14 abgelegt. Daraufhin wird der spezielle Kalibriermodus verlassen.

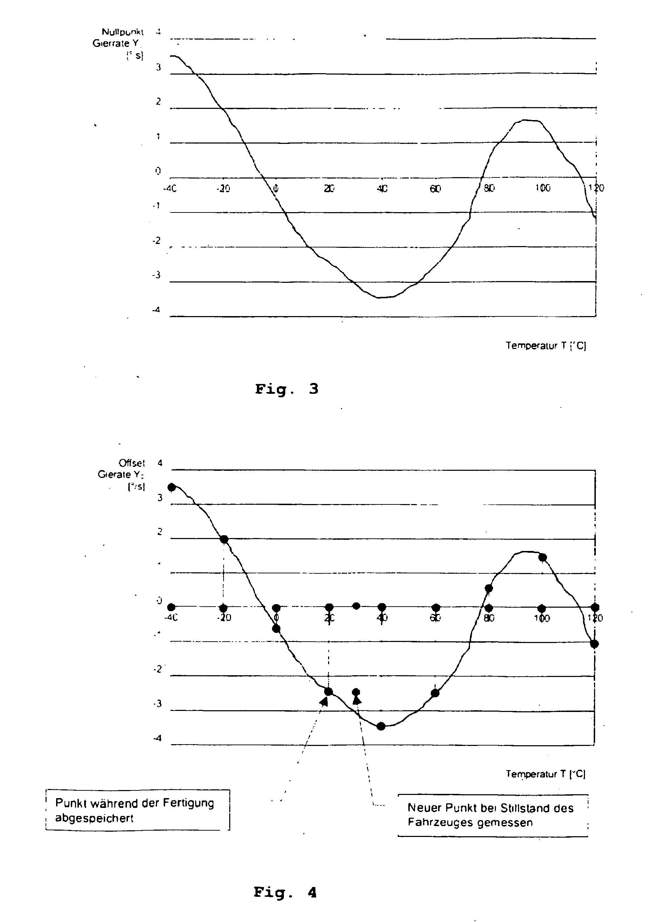

Fig. 3 zeigt beispielhaft eine Kurve der Gierrate über die Temperatur, welche in einem ersten Betriebsmodus, nämlich während einer Kalibriermessung erstellt sein kann. Während des Kalibriermodus wird die Kurve der Gierrate über der Temperatur in Form von Stützstellen mit n-Punkten (n = Anzahl der Stützpunkte) aufgeteilt, wobei diese Punkte gespeichert werden.

Fig. 4 zeigt eine zur Nullpunkt-Kalibrierung des Gierratensensors herangezogene Anzahl von n-Punkten (Stützstellen) $[T, Y_O]$.

Im zweiten Betriebsmodus, nämlich im Betrieb des Sensors im Kraftfahrzeug, werden bei erkanntem Fahrzeugstillstand die Temperatur und der Nullpunkt des Gierratensensors gemessen und als neuer Punkt (Stützstelle) zwischengespeichert (Fig. 4). Mit den Stützstellen, die während der Fertigung im nichtflüchtigen Speicher 14 abgelegt wurden und dem neuen Punkt werden nun die Koeffizienten für ein Polynom 3. Ordnung mit Hilfe eines geeigneten Algorithmus neu berechnet. Diese neu berechneten Koeffizienten werden im nichtflüchtigen Speicher 14 des Sensor Cluster abgelegt und ersetzen die bis zu dem Zeitpunkt gültigen Werte.

Die Information über einen sicher erkannten Fahrzeugstillstand erhält das Sensor Cluster von einem übergeordneten Fahrzeugregler, vorzugsweise dem Fahrdynamikregler.

Das Polynom

$$Y_O = Cn(T)^n + C_{n-1}(T)^{n-1} + ... + C_1(T) + C_0$$

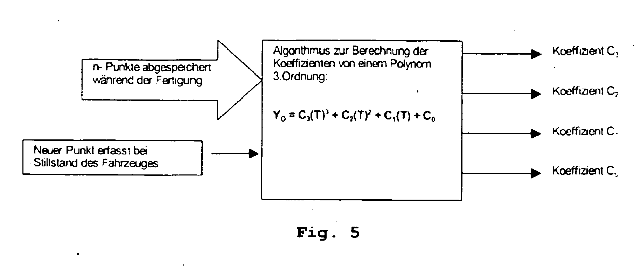

, welches im Kasten von Fig. 5 als Beispiel eines Polynoms 3.ter Ordnung dargestellt ist, dient zum Berechnen des neuen Nullpunkts. Das über die CAN-Schnittstelle gesendete Gierratensignal berechnet sich aus dem Sensorsignal und dem neu berechneten Nullpunkt dann gemäß der nachstehenden Formel.

$$Y_{Cluster} = Y_{Sensor} - Y_{Offset}$$

**Patentansprüche**

1.  Verfahren zur Kalibrierung eines Sensors, insbesondere eines Gierratensensors, bei dem Sensorwerte ($Y_{Sensor}$) und zugehörige Temperaturwerte (T) in Form von Stützstellen in einem nichtflüchtigen Speicher des Sensors abgelegt werden, wobei die Werte ($Y_{Sensor}$, T) während eines Kalibriermodus ermittelt werden, bei dem der Sensor einem vorgegebenen Temperaturprofil ausgesetzt wird, wobei mittels den in dem Kalibriermodus ermittelten Werten ($Y_{Sensor}$, T) Koeffizienten ($C_0$, ..., $C_{n-1}$, $C_n$) eines Polynoms n-.ter Ordnung bestimmt werden, wobei diese Koeffizienten gespeichert werden, **dadurch gekennzeichnet, dass** während des Betriebs des Sensors im Kraftfahrzeug mit Hilfe der ermittelten und gespeicherten Koeffizienten ($C_0$, ..., $C_{n-1}$, $C_n$) ein Kompensationswert $Y_{Offset}$ mittels eines Polynoms dritter Ordnung berechnet wird.

2.  Verfahren nach Anspruch 1, **dadurch gekennzeichnet, dass** während des Betriebs des Sensors im Kraftfahrzeug mit Hilfe der ermittelten und gespeicherten Koeffizienten ($C_0$, ..., $C_{n-1}$, $C_n$) ein Kompensationswert $Y_{Offset}$ mittels eines Polynoms n-.ter Ordnung berechnet wird.

3.  Verfahren nach Anspruch 1 oder 2, **dadurch gekennzeichnet, dass** während des Betriebs des Sensors im Kraftfahrzeug mit Hilfe des Kompensationswerts $Y_{Offset}$ und des gemessenen Sensorwerts ein fehlerkorrigierter Sensorwert $Y_{Cluster}$ ermittelt wird.

4.  Verfahren nach einem der vorherigen Ansprüche 1 bis 3, **dadurch gekennzeichnet, dass** während des Betriebs des Sensors im Kraftfahrzeug fehlerkorrigierte Sensorwerte $Y_{Cluster}$ und zugehörige Temperaturwerte T zur Berechnung der Koeffizienten des Polynoms n-.ter Ordnung bestimmt werden, wobei diese Koeffizienten gespeichert werden.

**Claims**

1. Method for calibration of a yaw rate sensor, in which sensor values ($Y_{Sensor}$) and associated temperature values (T) are stored in the form of support points in a non-volatile memory in the sensor, wherein the values ($Y_{Sensor}$, T) are determined in a calibration mode in which the sensor is subjected to a predetermined temperature profile, wherein coefficients ($C_0$, ..., $C_{n-1}$, $C_n$) of an n-th order polynomial are determined by means of the values ($Y_{Sensor}$, T) determined in the calibration mode, with these coefficients being stored, **characterized in that**, when the sensor is being operated in a motor vehicle, a compensation value $Y_{Offset}$ is calculated by means of a third-order polynomial with the aid of the determined and stored coefficients ($C_0$, ..., $C_{n-1}$, $C_n$).

2. Method according to Claim 1, **characterized in that**, when the sensor is being operated in a motor vehicle, a compensation value $Y_{Offset}$ is calculated by means of an n-th order polynomial with the aid of the determined and stored coefficients ($C_0$, ..., $C_{n-1}$, $C_n$).

3. Method according to Claim 1 or 2, **characterized in that**, when the sensor is being operated in a motor vehicle, an error-corrected sensor value $Y_{Cluster}$ is determined with the aid of the compensation value $Y_{Offset}$ and the measured sensor value.

4. Method according to one of the preceding Claims 1 to 3, **characterized in that**, when the sensor is being operated in a motor vehicle, error-corrected sensor values $Y_{Cluster}$ and associated temperature values T are determined in order to calculate the coefficients of the n-th order polynomial, with these coefficients being stored.

**Revendications**

1. Procédé d'étalonnage d'un détecteur de vitesse de lacet, dans lequel des valeurs de détecteur ($Y_{sensor}$) et des valeurs associées de température (T) sont conservées comme points d'appui dans une mémoire non volatile du détecteur,

    les valeurs ($Y_{sensor}$, T) étant déterminées dans un mode d'étalonnage dans lequel le détecteur est exposé à un profil de température prédéterminé et
    des coefficients ($C_0$, ..., $C_{n-1}$, $C_n$) d'un polynôme d'ordre n étant déterminés au moyen des valeurs ($Y_{sensor}$, T) déterminées en mode d'étalonnage, ces coefficients étant conservés en mémoire,
    **caractérisé en ce que**
    lorsque le détecteur est en fonctionnement dans le véhicule automobile, une valeur de compensation $Y_{offset}$ est calculée au moyen d'un polynôme d'ordre trois à l'aide des coefficients ($C_0$, ..., $C_{n-1}$, $C_n$) déterminés et conservés en mémoire.

2. Procédé selon la revendication 1, **caractérisé en ce que** lorsque le détecteur est en fonctionnement dans le véhicule automobile, une valeur de compensation $Y_{offset}$ est calculée au moyen d'un polynôme d'ordre n à l'aide des coefficients ($C_0$, ..., $C_{n-1}$, $C_n$) déterminés et conservés en mémoire.

3. Procédé selon les revendications 1 ou 2, **caractérisé en ce que** lorsque le détecteur est en fonctionnement dans le véhicule automobile, une valeur de détecteur $Y_{cluster}$ dont les erreurs sont corrigées est déterminée à l'aide de la valeur de compensation $Y_{offset}$ et de la valeur mesurée par le détecteur.

4. Procédé selon l'une des revendications 1 à 3 qui précèdent, **caractérisé en ce que** lorsque le détecteur est en fonctionnement dans le véhicule automobile, des valeurs de détecteur $Y_{cluster}$ dont les erreurs ont été corrigées et des valeurs associées de température T sont déterminées pour calculer les coefficients du polynôme d'ordre n, ces coefficients étant conservés en mémoire.

Fig. 1

11    $Y_{Sensor}$                                                     $Y_{Cluster}$

$Y_{Offset}$

$Y_0 =$
12 —T→  $C_n(T)^n + C_{n-1}(T)^{n-1}$
+ ... + $C_1(T) + C_0$

Koeffizienten
$C_0, C_1, ... , C_{n-1}, C_n$

Algorithmus zur Berechnung der
Koeffezienten von einem Polynom n.ter
Ordnung

$Y$

·T  12

Koeffizienten $C_0, C_1, ... , C_{n-1}, C_n$
Stützstellen $Y_{Offset}(T)$

14

10

Fig. 2

Nullpunkt
Gierrate Y
[° s]

Temperatur T [°C]

**Fig. 3**

Offset
Gierate Y₂
[°/s]

Temperatur T [°C]

Punkt während der Fertigung
abgespeichert

Neuer Punkt bei Stillstand des
Fahrzeuges gemessen

**Fig. 4**

8

n- Punkte abgespeichert während der Fertigung

Neuer Punkt erfasst bei Stillstand des Fahrzeuges

Algorithmus zur Berechnung der Koeffizienten von einem Polynom 3.Ordnung:

$$Y_0 = C_3(T)^3 + C_2(T)^2 + C_1(T) + C_0$$

Koeffizient $C_3$

Koeffizient $C_2$

Koeffizient $C.$

Koeffizient $C.$

**Fig. 5**

**IN DER BESCHREIBUNG AUFGEFÜHRTE DOKUMENTE**

**In der Beschreibung aufgeführte Patentdokumente**

- WO 0032022 A
- WO 0150090 A1
- EP 1059509 A
- DE 4228893 B4